# EUROPEAN PATENT SPECIFICATION

(11) **EP 3 134 194 B1**
(45) Date of publication and mention of the grant of the patent: **03.03.2021**
(21) Application number: 15783653.7
(22) Date of filing: 09.04.2015
(51) Int. Cl.: B30B 9/12, B30B 9/26

(54) **MODULAR SCREW PRESS**
MODULARE SCHNECKENPRESSE
PRESSE À VIS MODULAIRE

(30) Priority: 22.04.2014 EP 14001432
(43) Date of publication of application: 01.03.2017
(73) Proprietor: Rio Tinto Alcan International Limited, Montréal, QC H3B 0E3 (CA)
(72) Inventor: BOIVIN, Alain, La Baie, Quebec G7B 3N9 (CA); LABRUM, Deane, Forest Lake, Queensland 4078 (AU); SIMARD, Guy, La Malbaie, Quebec G5A 2N8 (CA); VANDAL, Pascal, Chicoutimi, Quebec G7J 2R5 (CA)
(74) Representative: Champain, Christophe
(86) International application number: PCT/IB2015/000469
(87) International publication number: WO 2015/162473

(56) References cited:
- EP-A1- 2 204 269
- WO-A1-02/20257
- WO-A1-93/00799
- WO-A1-2011/092819
- WO-A2-2005/063475
- GB-A- 310 680
- GB-A- 2 443 428
- GB-A- 191 300 386
- US-A- 4 446 778
- US-A- 4 446 788
- US-A- 5 151 026
- US-A1- 2010 203 222
- US-A1- 2012 135 098

## Description

### TECHNICAL FIELD

The present invention relates generally to solid-liquid separation equipment and, more particularly, to a screw press for dewatering a slurry.

### BACKGROUND OF THE ART

Screw presses are well known. Conventional screw presses typically have a single configuration adapted for a specific separation process without being adaptable to other kinds.

Modular screw presses have also been developed. Such modular screw presses generally comprises separate sections adapted to be assembled to one another. While known modular screw presses provide for wider ranges of applicability, the reconfiguration thereof typically requires complete removal of the screw press from the process line and, then, disassembly of the screw press. This requires the complete shutdown of the process line and, thus, results in significant downtime. A modular screw press according to the preamble of claim 1 is disclosed in US-A-2010/203222.

Accordingly, there is a need to provide a new modular screw press which can be easily assembled and disassembled while insuring the integrity of the screw press.

### SUMMARY

It is therefore an object to facilitate the maintenance and reconfiguration of a screw press. In accordance with a general aspect of the present invention, there is provided a screw press for separating liquid from a solid-liquid mixture, said screw press comprising: a generally tubular body having axially spaced-apart inlet section and outlet section, and a filter section between said inlet section and outlet section; said filter section having liquid passages; and a rotatable screw mounted in said tubular body for conveying the solid-liquid mixture from the inlet section to the outlet section while compressing the solid-liquid mixture and forcing at least part of a liquid content thereof to be expelled out of the tubular body through said liquid passages of said filter section; characterized in that the generally tubular body and the rotatable screw are both of modular construction, the filter section of the tubular body comprising at least first and second serially interconnectable filter sections, the rotatable screw having at least first and second serially interconnectable screw sections respectively disposed in said first and second filter sections for joint rotation as a unitary component, and in that the first and second screw sections have a continuous screw flight having a flight outside diameter, the at least first and second screw sections being detachably coupled to one another by a coupling provided at said outside flight diameter.

In accordance with another aspect of the present invention, there is provided a coupling for joining first and second screw sections of a screw press, the coupling comprising a first coupling member mounted to a first screw flight section at a first end of the first screw section, and a second coupling member mounted to a second screw flight section at a second end of the second screw section, the first and second coupling members being detachably fasteneable to one another.

According to a further general aspect, the first and second coupling members comprise respective semi-cylindrical plates mounted to an outside diameter surface of the screw flight on the first and second screw sections; when interconnected, the semi-cylindrical plates forming a support ring about the first and second screw flight sections.

Further details of these and other aspects of the present invention will be apparent from the detailed description and figures included below.

### DESCRIPTION OF THE DRAWINGS

Reference is now made to the accompanying figures, in which:
Fig. 1 is a schematic view of a pressure filtration installation in accordance with an embodiment of the present invention;
Fig. 2 is an exploded perspective view illustrating construction details of a screw press forming part of the pressure filtration installation shown in Fig. 1;
Fig. 3 is a partly exploded perspective view of one of the filter sections of the screw press;
Fig. 4 is a longitudinal cross-section view of the filter section shown in Fig. 3;
Fig. 5 is an enlarged view illustrating an inter-plate gap between two adjacent filtration plates of the filter section shown in Figs. 3 and 4; and
Fig. 6 is a perspective view illustrating the details of an external coupling between two screw sections of the screw press.

### DETAILED DESCRIPTION OF THE PREFERRED EMBODIMENTS

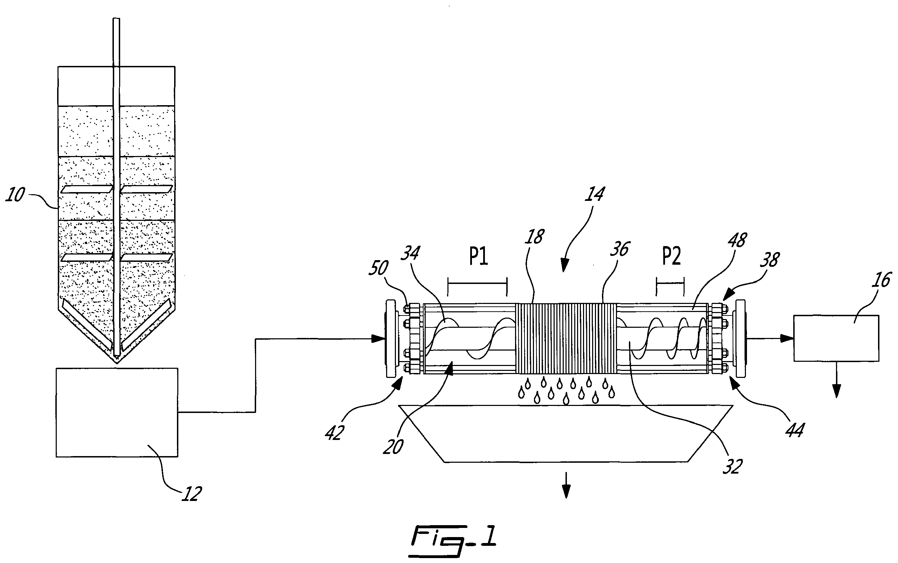

Fig. 1 is representative of an application to which the principles of the present invention may be applied. More particularly, Fig. 1 illustrates a pressure filtration installation for removing liquid from a solid-liquid mixture. According to one application, the pressure filtration installation is particularly well adapted for dewatering red mud (the residue of Bayer process in the production of alumina from Bauxite ore). However, it is understood that the pressure filtration installation could be configured and use for dehydrating various types of slurry and is, thus, not strictly limited to red mud dewatering applications.

As can be appreciated from Fig. 1, the installation generally comprises a reservoir 10 containing the red mud or slurry to be dehydrated, feeding means, such as a positive displacement pump 12, operatively connected to the reservoir 10 for feeding the slurry under pressure to a screw press 14, and a valve 16 for regulating the flow of dehydrated mud at a discharged end of the screw press 14.

The positive displacement pump is usually combined with means for allowing the delivery of a substantially constant flow rate of slurry at a substantially constant inlet pressure. The input flow rate of slurry can be controlled by the stroke speed of a positive displacement pump. The inlet pressure and flow rate can be maintained during cycle/piston changeover of the positive displacement pump, by a non-return valve (or a check valve) to prevent reverse flow, and by a pressurized dampener, such as a reservoir, to supply slurry during the changeover.

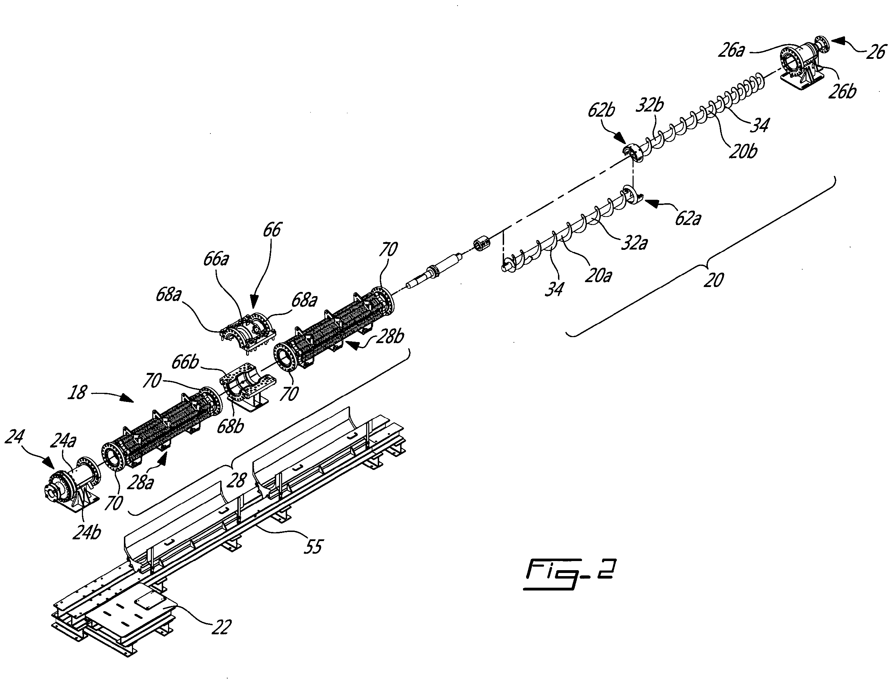

As shown in Fig. 2, the screw press 14 generally comprises a filter casing having a generally tubular body 18 for surrounding a screw 20 adapted to be rotatably mounted within the tubular body 18. A motor (not shown) is mounted on a platform 22 adjacent to the filter casing for driving the screw 20 via a suitable transmission arrangement, such as a belt transmission or a direct drive (not shown). In operation, the screw 20 applies a longitudinal pressure gradient on the solid-liquid mixture to be dewatered. The pressure of the fed slurry or the slurry supply pressure, for instance at the outlet of the displacement pump 12, causes the liquid to be squeezed out from the mixture and out of the screw press casing as schematically depicted in Fig. 1. In addition to the slurry pressure, the action of the screw 20 on the solid-liquid mixture also causes the liquid to be squeezed out from the mixture and out of the screw press casing. The size of the opening of the outlet valve can be continuously altered to simultaneously maintain the required pressure within the apparatus and to control the outlet flow rate of the dewatered slurry.

As best shown in Fig. 1, the screw 20 generally comprises a shaft 32 and a continuous flight 34 extending helically around a smooth outer surface of the shaft 32. The screw flight 34 has a constant outer flight diameter, which is slightly less than an inner diameter of the tubular body of the filter casing by a predetermined flight clearance. According to one embodiment of the present invention, the outer diameter of the shaft 32 is constant along all the length of the screw 20. Still according to this embodiment, the pitch (see P1 and P2 on Fig.1) of the flight 34 gradually decreases towards the discharge end of the screw press (i.e. in a downstream direction). As a result, the volume between adjacent turns of the screw flight 34 decreases progressively towards the discharge end of the screw press 14, thereby gradually increasing the pressure on the solid-liquid mixture and promoting solid-liquid separation.

As shown in Fig. 2, the tubular body 18 of the filter casing has axially opposed inlet and outlet sections 24, 26, and a filter section 28 between the inlet and outlet sections 24, 26. As schematically illustrated in Fig. 1, the filter section 28 has fluid passages for allowing liquid to be evacuated out of the filter casing as the solid-liquid mixture is being conveyed from the inlet section 24 to the outlet section 26 by the screw 20. The inlet section 24 is operatively connectable in flow communication to the output side of the positive displacement pump 12 for receiving a continuous feed of the slurry at a predetermined pressure. The inlet section 24 is preferably designed for maintaining continuous fluid communication with the tubular body 18. Satisfactory results have been obtained by force-feeding the screw press 14 at a pressure preferably ranging from about 2 N/mm² (approximately 300 psi) to about 14 N/mm² (approximately 2000 psi), and more preferably between about 4-10 N/mm² (approximately 600-1500 psi). It is understood that the feeding pressure may change depending on the size of the screw press 14. The outlet section 26 may have a conical passage section operatively connectable to the valve 16 to regulate the flow of dehydrated sludge coming out from the screw press and to maintain the desired filtering pressure inside the filter casing.

The inlet and outlet sections 24, 26 each include upper and lower half-shell members 24a, 24b; 26a, 26b adapted to be bolted to one another to form a complete cylindrical casing section. Bushings or the like (not shown) may be provided in the inlet and outlet sections 24, 26 on the inner surfaces of the half-shell members 24a, 24b; 26a, 26b to rotatably support the axially opposed ends of the screw 20.

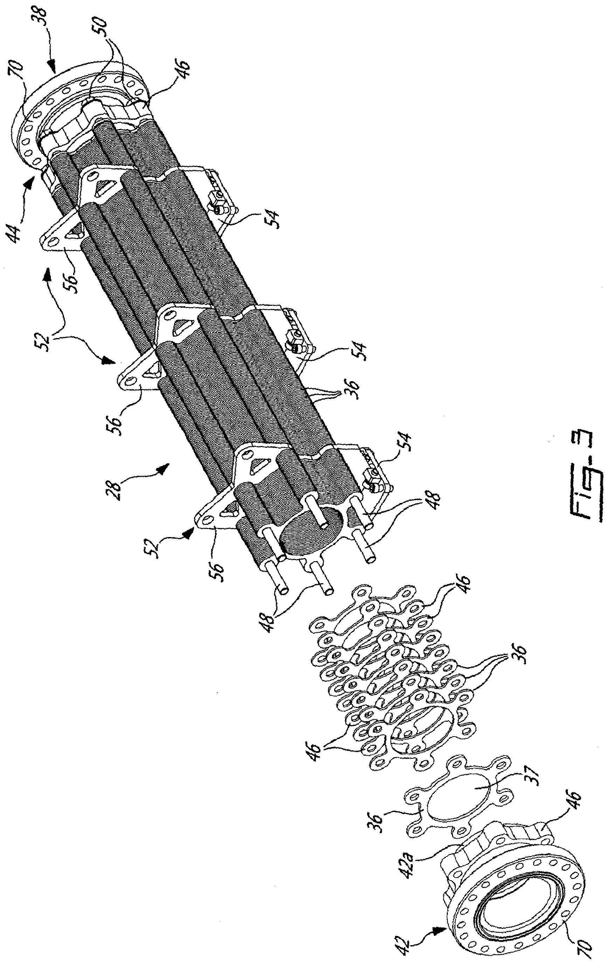

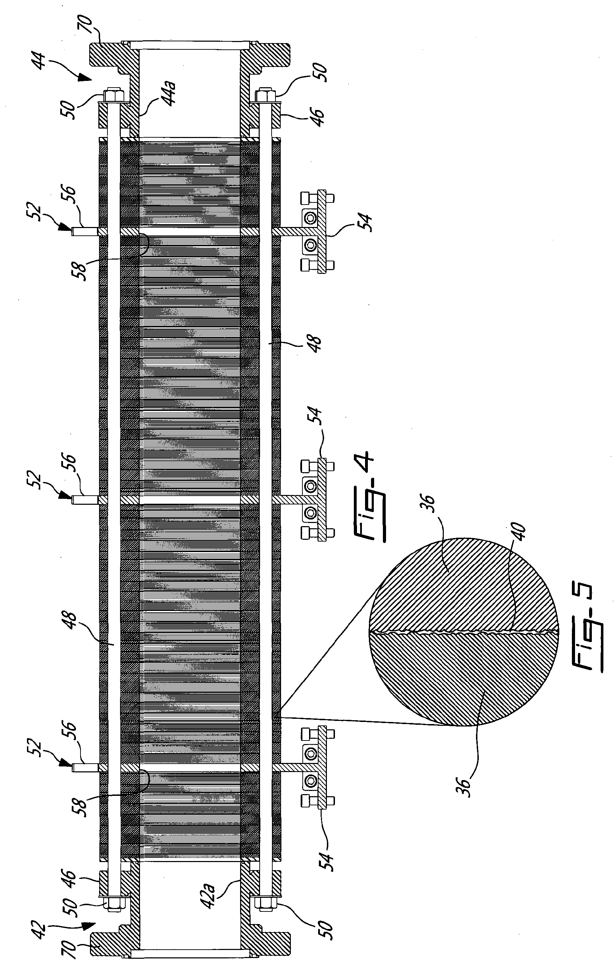

Referring to Figs. 3 and 4, it can be appreciated that the filter section 28 generally comprises a plurality of stationary filtration plates 36 axially clamped to be preferably continuously maintained in intimate face-to-face contact by a clamping assembly 38 operable for applying a predetermined axial clamping pressure substantially uniformly about an inner diameter of the plates 36. The predetermined axial clamping pressure is preferably maintained constant. Each filtration plate 36 may be provided in the form of a flat disc defining a central hole 37. Once assembled, the central holes 37 of the plates 36 are axially aligned to jointly form an axially extending core passage for receiving the screw 20.

Since the filtration plates 36 are continuously maintained in intimate face-to-face contact, there is no risk that some of the discs be forced apart, which would create preferential passages and results in intermittent decrease of the slurry pressure inside the core passage below the pressure at the outlet of the displacement pump 12. Consequently, there is no risk that small particles, such as the one contained in red mud slurry, could remain stuck between filter discs. It is a significant advantage over the filtration apparatus of the prior art to be able to maintain the slurry pressure inside the screw press of the invention at a relatively constant value. The screw press of the present invention is consequently preferably operated in steady state most of the time.

As will be seen hereinafter, the clamping pressure and the surface roughness of the plates 36 are selected to provide for the formation of a predetermined "micro" inter-plate gap 40 (Fig. 5) between each pair of adjacent plates 36. The inter-plate gap 40 is selected to be sufficiently large to allow the liquid, which has been squeezed out by the screw 20, to percolate between the plates 36, while being sufficiently small to prevent the passage of the solid particles, thereby allowing for the formation of a cake of dehydrated mud on the inner diameter of the filter section 28. Once formed, the solid particle cake contribute to maintain the pressure inside the filter section 28 despite the presence of the inter-plate gaps 40 (i.e. it limits pressure escape through the inter-plate gaps 40). The thickness of the solid particle cake is maintained by the screw, which also acts to trim said cake. Depending on the solid-liquid mixture to be dehydrated, the inter-plate gaps 40 may range from about 1 to about 60, and preferably from about 2 microns to about 20 microns. For red mud dewatering applications, the inter-plate gap 40 is preferably from about 4 microns to about 6 microns and more preferably from about 5 microns to about 6 microns. It can be generally said that the inter-plate gaps 40 are selected to be smaller or in the same order of magnitude than a medium size value of the solid particles contained in the solid-liquid mixture to be processed and sufficiently large to allow liquid percolation.

As mentioned herein above and as schematically illustrated in Fig. 5, each inter-plate gap 40 is function of the surface roughness of the plates 36. The surface roughness (R) of the filtration plates 36 may be defined as the average peak height of the asperities at the surface of the filtration plates 36. When the plates are clamped together, the peaks extending from the opposing faces of the plates 36 prevent the plates from mating in perfect face-to-face sealing engagement, thereby resulting in the formation of micro-passages extending from the inner diameter of the plates 36 to the outer peripheral edge thereof. Depending on the solid-liquid mixture to be dehydrated, filtration plates having a surface roughness ranging from about 1 micron to about 30 microns could be used. Tests have shown that the optimum range of surface roughness for red mud filtration applications is between about 1.4 microns and about 3.5 microns. However, satisfactory results may also be obtained with surface roughness ranging from about 2 microns to about 10 microns. By surface roughness of filtration plates, it is generally meant the surface roughness on the entire surface of both faces of each plate.

The liquid passages of the filter section 28 are formed by inter-plate gaps 40 defined between each pair of adjacent filtration plates 36. The liquid passages extend from the inner diameter of the plates 36 to the outer peripheral edge thereof. The liquid passages surround the core passage defined by the axially extending stack of coplanar filtration plates 36. The filtration plates 36 being maintained clamped, preferably at all time or continuously, in direct intimate face-to-face contact, the resulting liquid passages, which extend from the inner diameter of the plates 36 to the outer peripheral edge thereof, are uniformly distributed around the core passage, thereby preventing the creation of preferential passages.

In other words, the filtration plates 36 are maintained clamped, preferably continuously, in direct intimate face-to-face contact, on a surface that extends from the inner diameter of the plates 36 to the outer peripheral edge thereof, so that the resulting liquid passages are uniformly distributed around the core passage, thereby preventing the creation of preferential passages.

Tactile or optical roughness depth measuring equipment is used to ensure that the plates 36 have the desired surface roughness. Preferably, the plate surface roughness is measured using a contact-type instrument having a stylus adapted to be placed in direct contact with the surface of each of the filtration plates 36. As the stylus traces across a plate, it rises and falls together with the roughness on the plate surface. This movement in the stylus is picked up and used to measure surface roughness.

The filtration plates 36 may be made out of a wide variety of materials, including, for instance: stainless steel, black steel, steel with a baked paint finish, and ceramic. It has been observed that a baked paint finish allows improving the permeability of the filter section 28 while offering a good protection against abrasion and corrosion. The selected material must be able to sustain corrosive environments, stable at the operating temperatures (e.g. 100 °C), and strong enough not to collapse or be subject to compression/deformation over the entire range of clamping pressures applied by the clamping assembly 38. The plate material is also selected so that the fluid flow resistance through the inter-plate gaps 40 is inferior to the resistance of the solid particle cake formed on the inner diameter of the plates 36. In other words, the fluid flow resistance of the filtration plates 36 is selected so that it is less limitative than that of the solid particle cake. It is noted that different materials with different surface roughness may be used to obtain similar liquid flow resistances between the filtration plates 36. For instance, it has been found, while conducting red mud dewatering experimentations, that stainless steel plates with a 1.4 surface roughness and steel plates with a baked paint finish and a surface roughness of 3.5 offer similar liquid flow resistances.

The liquid flow resistance through the inter-plate gaps 40 is also function of the filtration height which corresponds to the distance along which the plates 36 are urged in intimate face-to-face contact between their inner diameter and their outer peripheral edge. The greater the filtration height, the greater the flow resistance through the plates will be. The filtration plates 36 being preferably maintained clamped, at all time, in direct intimate face-to-face contact, the resulting liquid passages extend over the whole filtration height, thereby preventing the creation of preferential passages.

The filtration plates 36 may be subject to various surface treatments to obtain the desired surface roughness and liquid flow resistance. For instance, the plates 36 may be subjected to a bead blasting surface treatment. Glass beads surface treatment is preferred over sand blasting surface treatment. Sand blasting is more abrasive and results in greater surface roughness values than those obtained with glass bead blasting.

Various coatings may be applied to the filtration plates 36 to protect them against corrosion, to change their hydrophobic or hydrophilic properties and/or to alter their surface roughness. For instance, a mixture of paint and particles could be applied over the plates 36 to protect them against corrosion and to obtain a desired surface roughness.

As mentioned herein before, the inter-plate gaps 40 are also function of the clamping pressure applied on the filtration plates 36. The clamping pressure must be applied as uniformly as possible about the core passage defined by the filtration plates 36 in order to avoid leakage. Referring to Figs. 3 and 4, it can be appreciated that the clamping assembly 38 generally comprises first and second clamping plates 42, 44 respectively provided at opposed ends of the filter section 28 with the filtration plates 36 disposed there between. Each of the first and second clamping plates 42, 44 has a load distribution portion, which may take the form of a ring or cylindrical projection 42a, 44a extending from one face thereof, for entering in uniform bearing contact with an adjacent one of the filtration plates 36 concentrically about the central hole 37 thereof. Uniformly circumferentially distributed ear sections or eyelet projection 46 extend radially outwardly from the filtration plates 36 and the cylindrical projections 42a, 44a of the clamping plates 42, 44 for engagement with axially extending stay bolts 48. It is understood that the mounting holes defined by the eyelet projections could be otherwise provided. For instance, mounting holes could be defined directly in the filtering ring surface of the plates 36. At least four, preferably six, sets of eyelets and stay bolts are circumferentially distributed about the core passage defined by the filtration plates 36. Nuts 50 are threadably engaged at opposed distal ends of the stay bolts 48 to axially clamp the stack of filtration plates 36 between the clamping plates 42, 44. The nuts 50 are tighten at a same predetermined torque. A suitable tool, such as a torque wrench, is used to ensure that the exact same torque is applied at each nut 50. According to one application of the present invention, a calibrated tightening torque comprised between about 56 N-m (approximately 500 Ibf-in) and about 560 N-m (approximately 5000 Ibf-in) is applied on each of the nuts 50. The required torque increases with the size (length and diameter) of the screw press 14. For instance, for a screw having a diameter of about 0.1m, the clamping torque could be about 56 N-m (approximately 500 Ibf-in); whereas for a diameter of 0.3, the clamping torque could be in the vicinity of 225 N-m (approximately 2000 Ibf-in). The thickness of the clamping plates 42, 44, including the cylindrical projections 42a, 44a and the eyelets 46 or ear sections, is selected to avoid any deformation under such tightening conditions. This is why the clamping plates 42, 44 are much thicker than the filtration plates 36. This allows to ensure uniform pressure distribution on the plates between adjacent nuts 50 and, thus, about the circumference of the central hole 37 of the filtration plates 36. It is understood that the value of the torque will vary depending on the size/geometry of the filtration plates 36. The torque is selected to generally correspond to a clamping pressure of between about 1.4 N/mm² (approximately 200 psi) and about 3.5 N/mm² (approximately 500 psi), and preferably between about 2 N/mm² (approximately 300 psi) and about 2.8 N/mm² (approximately 400 psi) on each of the filtration plates 36.

The clamping pressure applied on the filtration plates 36 is such that the filtration plates are maintained clamped, preferably at all time or continuously, in direct intimate face-to-face contact.

As shown in Figs. 3 and 4, at least one intermediate support plate 52 (three in the illustrated example) is interposed between two adjacent filtration plates 36. The number of support plates 52 will vary depending on the axial length of the filter section 28. The supports plates 52 are inserted at predetermined intervals along the axial length of the filter section 28 to provide uniform support and prevent deformation of the stack of filtration plates 36 under the clamping forces applied thereon by the clamping plates 42, 44. The support plate 52 contributes to solidify the plate assembly while providing a bottom mounting interface or foot 54 for fastening the filter section 28 to an underlying frame structure 55 (Fig. 1). Also, the intermediate support plate 52 may be provided at an upper end thereof with a pair of ear projections 56 for facilitating handling and transportation of the assembled filter section 28. Mounting holes are also defined in the intermediate support plate for engagement on the stay bolts 48. The intermediate support plate 52 is thicker than the filtration plates 36. It offers a stable and uniform bearing surface for the adjacent filtration plates 36 and, thus, contributes to maintain a uniform clamping pressure across the whole filtration plate assembly. Like the filtration plates 36, each intermediate support plate 52 has a central hole 58 defining a portion of the core passage of the filter section 28. The intermediate support plate 52 typically has the same surface roughness as the filtration plates 36. Accordingly, the filtration gaps on opposed sides of each intermediate support plate 52 are similar to inter-plate gaps 40 between adjacent filtration plates 36.

The above described embodiment of the pressure filtration installation allows improving the compaction of the solid-liquid mixture. That is more liquid can be extracted from the mixture. For red mud dewatering applications, tests have shown that the dehydrated mud may be 70% to 75%, and sometime up to 77% solid in terms of weight at its exit from the outlet section 26 of the screw press 14. For calcium fluoride (CaF2) dewatering applications, tests have shown that the dehydrated mud may be up to 80% solid in terms of weight at its exit from the outlet section 26 of the screw press 14. For iron tailing dewatering applications, tests have shown that the dehydrated mud may be up to 89% solid in terms of weight at its exit from the outlet section 26 of the screw press 14. This is an improvement of about 20% over conventional red mud gravity decanting processes. It can generally be said that the pressure filtration apparatus allows to increase the solid fraction of compacted slurry discharged from the outlet section of a screw press, while maximizing the solid-liquid separation rate.

As can be appreciated from Fig. 2, the tubular body 18 and the screw 20 is of modular construction. According to the illustrated example, the tubular body 18 has first and second serially interconnectable filter sections 28a; 28b and the screw 20 has corresponding first and second serially interconnectable screw sections 20a, 20b adapted to be respectively mounted in the first and second filter sections 28a, 28b for joint rotation as a unitary component. However, it is understood that the tubular body 18 and the screw 20 could comprise more than two sections.

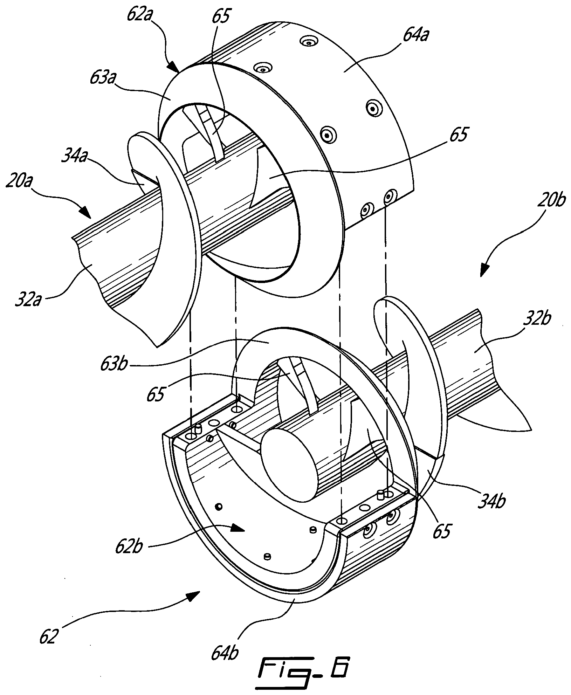

The first and second screw sections 20a, 20b are joined together so as to have a continuous screw flight with no discontinuities between the sections 20a, 20b and to ensure that the volume between adjacent turns of the flight 34 at the junction of the two screw sections 20a, 20b is not reduced by the coupling 62. As shown in Fig. 6, the screw sections 20a, 20b are detachably coupled to one another by an external coupling 62 provided at the outside diameter of the flight 34. Typically, screw sections are coupled via their shafts. Such shaft coupling arrangements may in some instances require that the shafts be reinforcement at their junction, thereby resulting in a reduction of the slurry compression volume between adjacent flight turns at the transition from one shaft section to the next. Accordingly, in order not to be intrusive, it is herein proposed to couple the shaft exteriorly from the volume defined between adjacent turns of the flight, thus maintaining the cross sectional area the slurry passes through, which minimises flow restrictions and reduces the likelihood of blockage.

The coupling 62 generally comprises a first coupling member 62a mounted to a first screw flight section 34a at a distal end of the first screw section 20a, and a second coupling member 62b mounted to a second screw flight section 34b at an adjacent end of the second screw section 20b. The first and second coupling members 62a, 62b are detachably fasteneable to one another, such as by bolting.

The first and second coupling members 62a, 62b may comprise semi-cylindrical plates or ring segments mounted to the outside diameter surface of the screw flight sections 34a, 34b, respectively. Each of the screw flight sections 34a, 34b may be provided in the form of a half-flight segment. The inboard end of the semi-cylindrical plates may be integrally provided with a frusto-conical section 63a, 63b adapted to be interconnected to the associated screw shaft sections 32a, 32b via strut-like members 65. When interconnected, the semi-cylindrical plates form a complete support ring about the first and second screw flight sections 34a, 34b, the support ring having an inside diameter corresponding to the outside diameter of the flight 34. Therefore, the coupling 62 does not reduce the volume between flight sections 34a, 34b. The semi-cylindrical plates may be welded on an inner surface thereof to the outside diameter surface of the first and second screw flight sections 34a, 34b. The coupling member 62a, the screw flight section 34a and associated struts 65 are preferably mounted as a pre-assembled unit to screw shaft section 32a. Likewise, the coupling member 62b, the screw flight section 34b and associated struts 65 are preferably mounted as a pre-assembled unit to screw shaft section 32b. According to an embodiment of the present invention, the first and second flight sections 34a, 34b are welded to the inner surface of the coupling members 62a, 62b and then the pre-assembled coupling and flight assemblies are subject to a heat treatment process in order to improve the mechanical properties of the coupling assembly. Thereafter, the heat treated coupling and screw flight united pieces are mounted to respective screw shaft sections 32a, 32b by welding the screw flight sections 34a, 34b to the outer surface of the shaft and to the end of the existing flight on respective shaft sections 32a, and 32b. The screw flight sections 34a, 34b are welded to extend in continuity to the flight already present on the shaft sections 32a, 32b. The struts 65 are also welded to the screw shaft sections 32a, 32b.

By welding screw flight sections 34a, 34b to the coupling members 62a, 62b prior to the heat treatment process and by then connecting the coupling members 62a, 62b to the screw shaft sections 32a, 32b, the structural integrity of the coupling members 62a, 62b can be preserved. Indeed, welding the coupling members 62a, 62b directly to flights on the shaft sections 32a, 32b could potentially negatively affect the mechanical properties of the coupling members 62a, 62b.

Also as shown in Fig. 6, wear plates 64a, 64b are removably mounted to the outer surface of each of the semi-cylindrical coupling members 62a, 62b for engagement with a corresponding segmented wear ring structure (not shown) mounted in a screw support section 66 (see Fig. 2) disposed between the first and second filter sections 28a, 28b. Accordingly, the coupling 62 may also be used to provide an intermediate support to the screw 20 generally mid-way between the opposed ends thereof. The screw support section 66 may comprise upper and lower half-shell members 66a, 66b adapted to be detachably bolted to each other. This ensures ready access to the coupling 62. The segmented wear ring structure (not shown) provided inside the screw support section 66 is configured to wear out prior to the wear plates 64a, 64b on the outer surface of the semi-cylindrical plates of the coupling members 62a, 62b. The upper and lower half-shell members 66a, 66b are provided at opposed end thereof with bolting flanges 68a, 68b for attachment with corresponding bolting flanges 70 provided on the clamping plates 42, 44 of each filter sections 28a, 28b. In this way, each screw and associated filter section 20a, 28a; 20b; 28b can be readily removed as a unit or cartridge and replaced by a similar screw and filtration "cartridge" by simply unbolting flange 70 from flanges 68a, 68b, unbolting the top half-shell member 66a, unbolting the screw coupling members 62a and 62b and unbolting the flange 70 at the other end of the screw and filter section to be replaced. All the bolts, including the bolts used to secure the first and second screw coupling members 62a and 62b, are easily accessible.

The above description is meant to be exemplary only, and one skilled in the art will recognize that changes may be made to the embodiments described without departing from the scope of the invention disclosed. Modifications which fall within the scope of the present invention will be apparent to those skilled in the art, in light of a review of this disclosure, and such modifications are intended to fall within the appended claims.

## Claims

1. A screw press (14) for separating liquid from a solid-liquid mixture, said screw press (14) comprising:
a generally tubular body (18) having axially spaced-apart inlet section (24) and outlet section (26), and a filter section (28) between said inlet section (24) and outlet section (26); said filter section (28) having liquid passages (40); and
a rotatable screw (20) mounted in said tubular body (18) for conveying the solid-liquid mixture from the inlet section (24) to the outlet section (26) while compressing the solid-liquid mixture and forcing at least part of a liquid content thereof to be expelled out of the tubular body (18) through said liquid passages (40) of said filter section (28);
wherein the generally tubular body (18) and the rotatable screw (20) are both of modular construction, the filter section (28) of the tubular body (18) comprising at least first and second serially interconnectable filter sections (28a, 28b), the rotatable screw (20) having at least first and second serially interconnectable screw sections (20a, 20b) respectively disposed in said first and second filter sections (28a, 28b) for joint rotation as a unitary component, and in that the first and second screw sections (20a, 20b) have a continuous screw flight (34) having a flight outside diameter, **characterized in that** the at least first and second screw sections (20a, 20b) are detachably coupled to one another by a coupling (62) provided at said outside flight diameter.

2. The screw press (14) defined in claim 1, **characterized in that** a screw support section (66) is mounted between said first and second filter sections (28a, 28b), said coupling (62) being rotatably supported within said screw support section (66).

3. The screw press (14) defined in claim 1 or 2, **characterized in that** the coupling (62) comprises a first coupling member (62a) mounted to a first screw flight section (34a) at a first end of the first screw section (20a), and a second coupling member (62b) mounted to a second screw flight section (34b) at a second end of the second screw section (20b), the first and second coupling members (62a, 62b) being detachably fasteneable to one another.

4. The screw press (14) defined in claim 3, **characterized in that** the first and second coupling members (62a, 62b) comprise respective semi-cylindrical plates mounted to an outside diameter surface of the screw flight (34) on the first and second screw sections (20a, 20b); when interconnected, the semi-cylindrical plates forming a support ring about the first and second screw flight sections (34a, 34b).

5. The screw press (14) defined in claim 4, **characterized in that** the semi-cylindrical plates are welded on an inner surface thereof to the outside diameter surface of the first and second screw flight sections (34a, 34b) of the first and second screw sections (20a, 20b).

6. The screw press (14) defined in claim 4 or 5, **characterized in that** wear plates (64a, 64b) are removably mounted to an outer surface of each of the semi-cylindrical plates for engagement with a corresponding segmented wear ring structure mounted in the screw support section (66).

7. The screw press (14) defined in claim 6, **characterized in that** the segmented wear ring structure is configured to wear out prior to the wear plates (64a, 64b) on the outer surface of the semi-cylindrical plates.

8. The screw press (14) defined in any one of claims 1 to 7, **characterized in that** each of said first and second filter sections (28a, 28b) comprises a plurality of filtration plates (36) axially clamped in intimate face-to-face contact between a pair of clamping plates (42, 44).

9. The screw press (14) defined in claim 8, **characterized in that** each of the first and second clamping plates (42, 44) has a load distribution portion (42a, 42b) in uniform bearing contact with an adjacent one of said filtration plates (36), said first and second clamping plates (42, 44) being thicker than each of said filtration plates (36); and **in that** each of the first and second filter sections (28a, 28b) further comprises a set of circumferentially distributed stay bolts (48) extending through axially aligned mounting holes (46) defined in the filtration plates (36) and the first and second clamping plates (42, 44); and nuts (50) threadably engaged at opposed distal ends of the stay bolts (48).

10. The screw press (14) defined in claim 9, **characterized in that** the load distribution portion (42a, 44a) is provided in the form of a ring projecting from an inner face of each of said first and second clamping plates (42, 44).

11. The screw press (14) defined in any one of claims 8 to 10, **characterized in that** at least one intermediate support plate (52) is interposed between two of the filtration plates (36), said intermediate support plate (52) being thicker than each of said filtration plates (36).

12. The screw press (14) defined in claim 2, **characterized in that** the screw support section (66) has upper and lower half-shell members (66a, 66b) adapted to be bolted to one another with said coupling (62) therebetween.

13. The screw press defined in claim 4, **characterized in that** the first and second screw flight sections (34a, 34b) are respectively welded to the first and second coupling members (62a, 62b) and then, the first and second coupling members (62a, 62b) with the first and second screw flight sections (34a, 34b) mounted thereon are submitted to a heat treatment process.

14. The screw press defined in claim 13, wherein after the heat treatment process, the first and second coupling members (62a, 62b) are respectively mounted to the first and second screw sections (20a, 20b) by welding the first and second screw flight sections (34a, 34b) to respective shafts (32a, 32b) of said first and second screw sections (20a, 20b).

## Patentansprüche

1. Schneckenpresse (14) zum Abscheiden von Flüssigkeit aus einem Gemisch aus Feststoff-Flüssigkeit, wobei die Schneckenpresse (14) umfasst:
einen im Allgemeinen röhrenförmigen Körper (18), der eine axial voneinander beabstandete Einlasssektion (24) und Auslasssektion (26) und eine Filtersektion (28) zwischen der Einlasssektion (24) und Auslasssektion (26) aufweist; wobei die Filtersektion (28) Flüssigkeitsdurchlässe (40) aufweist; und
eine drehbare Schnecke (20), die in dem röhrenförmigen Körper (18) montiert ist, um das Gemisch aus Feststoff-Flüssigkeit von der Einlasssektion (24) zu der Auslasssektion (26) zu fördern, während das Gemisch aus Feststoff-Flüssigkeit komprimiert wird, und mindestens ein Teil des Flüssigkeitsgehalts davon gezwungen wird, durch die Flüssigkeitsdurchlässe (40) der Filtersektion (28) hindurch aus dem röhrenförmigen Körper (18) ausgebracht zu werden;
wobei der im Allgemeinen röhrenförmigen Körper (18) und die drehbare Schnecke (20) beide modular gestaltet sind, wobei die Filtersektion (28) des röhrenförmigen Körpers (18) mindestens erste und zweite seriell miteinander verbindbare Filtersektionen (28a, 28b) umfassen, die drehbare Schnecke (20) mindestens erste und zweite seriell miteinander verbindbare Schneckensektionen (20a, 20b) aufweist, die jeweils in den ersten und zweiten Filtersektionen (28a, 28b) zur gemeinsamen Drehung als einheitliche Komponente angeordnet sind, und dadurch, dass die ersten und zweiten Schneckensektionen (20a, 20b) einen durchgehenden Schneckengang (34) aufweisen, der einen Gangaußendurchmesser aufweist,
**dadurch gekennzeichnet, dass** die mindestens erste und zweite Schneckensektion (20a, 20b) durch eine Kopplung (62), die an dem Gangaußendurchmesser bereitgestellt ist, trennbar miteinander gekoppelt sind.

2. Schneckenpresse (14) nach Anspruch 1, **dadurch gekennzeichnet, dass** eine Schneckenträgersektion (66) zwischen der ersten und zweiten Filtersektion (28a, 28b) montiert ist, wobei die Kopplung (62) drehbar innerhalb der Schneckenträgersektion (66) getragen wird.

3. Schneckenpresse (14) nach Anspruch 1 oder 2, **dadurch gekennzeichnet, dass** die Kopplung (62) ein erstes Kopplungsglied (62a), das an der ersten Schraubengangsektion (34a) an einem ersten Ende der ersten Schneckensektion (20a) montiert ist, und ein zweites Kopplungsglied (62b), das an der zweiten Schraubengangsektion (34b) an einem zweiten Ende der zweiten Schneckensektion (20b) montiert ist, umfasst, wobei das erste und zweite Kopplungsglied (62a, 62b) trennbar aneinander befestigbar sind.

4. Schneckenpresse (14) nach Anspruch 3, **dadurch gekennzeichnet, dass** das erste und zweite Kopplungsglied (62a, 62b) jeweilige halbzylindrische Platten umfassen, die auf einer Oberfläche des Außendurchmessers des Schneckenganges (34) in den ersten und zweiten Schneckensektionen (20a, 20b) montiert sind; wobei die halbzylindrischen Platten, wenn sie miteinander verbunden sind, einen Haltering um die ersten und zweiten Schraubengangsektionen (34a, 34b) herum bilden.

5. Schneckenpresse (14) nach Anspruch 4, **dadurch gekennzeichnet, dass** die halbzylindrischen Platten an einer inneren Oberfläche davon an die Oberfläche des Außendurchmessers der ersten und zweiten Schraubengangsektionen (34a, 34b) der ersten und zweiten Schneckensektionen (20a, 20b) geschweißt sind.

6. Schneckenpresse (14) nach Anspruch 4 oder 5, **dadurch gekennzeichnet, dass** Verschleißplatten (64a, 64b) trennbar an der äußeren Oberfläche der halbzylindrischen Platten zum Eingreifen mit einer entsprechenden segmentierten Verschleißringstruktur, die in der Schneckenträgersektion (66) montiert ist, montiert sind.

7. Schneckenpresse (14) nach Anspruch 6, **dadurch gekennzeichnet, dass** die segmentierte Verschleißringstruktur konfiguriert ist, um vor den Verschleißplatten (64a, 64b) an der äußeren Oberfläche der halbzylindrischen Platten zu verschleißen.

8. Schneckenpresse (14) nach einem der Ansprüche 1 bis 7, **dadurch gekennzeichnet, dass** jede der ersten und zweiten Filtersektionen (28a, 28b) eine Vielzahl von Filterplatten (36) umfasst, die axial in engem Kontakt Seite an Seite zwischen einem Paar von Klemmplatten (42, 44) geklemmt sind.

9. Schneckenpresse (14) nach Anspruch 8, **dadurch gekennzeichnet, dass** jede der ersten und zweiten Klemmplatte (42, 44) einen Lastverteilungsabschnitt (42a, 42b) in einheitlichem Lagerungskontakt mit einer angrenzenden der Filterplatten (36) aufweist, wobei die erste und zweite Klemmplatte (42, 44) dicker als jede der Filterplatten (36) ist; und dadurch, dass jede der ersten und zweiten Filtersektionen (28a, 28b) weiter einen Satz von umfänglich verteilten Stehbolzen (48) umfasst, die sich durch axial ausgerichtete Montagelöcher (46) erstrecken, die in den Filterplatten (36) und den ersten und zweiten Klemmplatten (42, 44) definiert sind; und Muttern (50), die gewindeförmig an gegenüberliegenden distalen Enden der Stehbolzen (48) eingeführt sind.

10. Schneckenpresse (14) nach Anspruch 9, **dadurch gekennzeichnet, dass** der Lastverteilungsabschnitt (42a, 44a) in der Form eines Ringes bereitgestellt ist, der sich aus einer Innenseite jeder der ersten und zweiten Klemmplatte (42, 44) erstreckt.

11. Schneckenpresse (14) nach einem der Ansprüche 8 bis 10, **dadurch gekennzeichnet, dass** mindestens eine Zwischenträgerplatte (52) zwischen zwei der Filterplatten (36) eingesetzt ist, wobei die Zwischenträgerplatte (52) dicker als jede der Filterplatten (36) ist.

12. Schneckenpresse (14) nach Anspruch 2, **dadurch gekennzeichnet, dass** die Schneckenträgersektion (66) obere und untere Halbschalenglieder (66a, 66b) aufweist, die angepasst sind, um mit der Kopplung (62) dazwischen miteinander verschraubt zu werden.

13. Schneckenpresse nach Anspruch 4, **dadurch gekennzeichnet, dass** die erste und zweite Schraubengangsektion (34a, 34b) jeweils an das erste und zweite Kopplungsglied (62a, 62b) geschweißt sind, und dann das erste und zweite Kopplungsglied (62a, 62b) mit der ersten und zweiten darauf montierten Schraubengangsektion (34a, 34b) einem Wärmebehandlungsprozess unterzogen werden.

14. Schneckenpresse nach Anspruch 13, wobei das erste und zweite Kopplungsglied (62a, 62b) nach dem Wärmebehandlungsprozess jeweils auf die erste und zweite Schneckensektion (20a, 20b) durch Schweißen der ersten und zweiten Schraubengangsektion (34a, 34b) auf jeweilige Wellen (32a, 32b) der ersten und zweiten Schneckensektion (20a, 20b) montiert werden.

## Revendications

1. Presse à vis (14) pour séparer un liquide d'un mélange solide-liquide, ladite presse à vis (14) comprenant :
un corps globalement tubulaire (18) ayant une section d'entrée (24) et une section de sortie (26) espacées axialement, et une section de filtre (28) entre lesdites section d'entrée (24) et section de sortie (26) ; ladite section de filtre (28) ayant des passages de liquide (40) ; et
une vis rotative (20) montée dans ledit corps tubulaire (18) pour transporter le mélange solide-liquide de la section d'entrée (24) à la section de sortie (26) tout en comprimant le mélange solide-liquide et en poussant au moins une partie de son contenu liquide devant être expulsé du corps tubulaire (18) à travers lesdits passages de liquide (40) de ladite section de filtre (28) ;
dans laquelle le corps globalement tubulaire (18) et la vis rotative (20) ont tous deux une construction modulaire, la section de filtre (28) du corps tubulaire (18) comprenant au moins des première et deuxième sections de filtre pouvant être reliées entre elles en série (28a, 28b), la vis rotative (20) ayant au moins des première et deuxième sections de vis pouvant être reliées entre elles en série (20a, 20b) respectivement disposées dans lesdites première et deuxième sections de filtre (28a, 28b) pour une rotation commune en tant que composant unitaire, et en ce que les première et deuxième sections de vis (20a, 20b) ont un filet de vis continu (34) ayant un diamètre extérieur de filet,
**caractérisée en ce que** les au moins première et deuxième sections de vis (20a, 20b) sont couplées de manière amovible l'une à l'autre par un accouplement (62) prévu audit diamètre extérieur de filet.

2. Presse à vis (14) selon la revendication 1, **caractérisée en ce qu'**une section de support de vis (66) est montée entre lesdites première et deuxième sections de filtre (28a, 28b), ledit accouplement (62) étant supporté en rotation à l'intérieur de ladite section de support de vis (66).

3. Presse à vis (14) selon la revendication 1 ou 2, **caractérisée en ce que** l'accouplement (62) comprend un premier élément d'accouplement (62a) monté sur une première section de filet de vis (34a) à une première extrémité de la première section de vis (20a), et un deuxième élément d'accouplement (62b) monté sur une deuxième section de filet de vis (34b) à une deuxième extrémité de la deuxième section de vis (20b), les premier et deuxième éléments d'accouplement (62a, 62b) pouvant être fixés de manière amovible l'un à l'autre.

4. Presse à vis (14) selon la revendication 3, **caractérisée en ce que** les premier et deuxième éléments d'accouplement (62a, 62b) comprennent des plaques semi-cylindriques respectives montées sur une surface de diamètre extérieur du filet de vis (34) sur les première et deuxième sections de vis (20a, 20b) ; lorsqu'elles sont reliées entre elles, les plaques semi-cylindriques forment une bague de support autour des première et deuxième sections de filet de vis (34a, 34b).

5. Presse à vis (14) selon la revendication 4, **caractérisée en ce que** les plaques semi-cylindriques sont soudées sur une surface intérieure de celles-ci à la surface de diamètre extérieur des première et deuxième sections de filet de vis (34a, 34b) des première et deuxièmes sections de vis (20a, 20b).

6. Presse à vis (14) selon la revendication 4 ou 5, **caractérisée en ce que** des plaques d'usure (64a, 64b) sont montées de manière libérable sur une surface extérieure de chacune des plaques semi-cylindriques pour un engagement avec une structure de bague d'usure segmentée correspondante montée dans la section de support de vis (66).

7. Presse à vis (14) selon la revendication 6, **caractérisée en ce que** la structure de bague d'usure segmentée est configurée pour s'user avant l'usure des plaques (64a, 64b) sur la surface extérieure des plaques semi-cylindriques.

8. Presse à vis (14) selon l'une quelconque des revendications 1 à 7, **caractérisée en ce que** chacune desdites première et deuxième sections de filtre (28a, 28b) comprend une pluralité de plaques de filtration (36) serrées axialement en contact étroit face contre face entre une paire de plaques de serrage (42, 44).

9. Presse à vis (14) selon la revendication 8, **caractérisée en ce que** chacune des première et deuxième plaques de serrage (42, 44) a une partie de répartition de charge (42a, 42b) en contact d'appui uniforme avec une plaque adjacente desdites plaques de filtration (36), lesdites première et deuxième plaques de serrage (42, 44) étant plus épaisses que chacune desdites plaques de filtration (36) ; et **en ce que** chacune des première et deuxième sections de filtre (28a, 28b) comprend en outre un ensemble de boulons d'ancrage répartis de manière circonférentielle (48) s'étendant à travers des trous de montage alignés axialement (46) définis dans les plaques de filtration (36) et les première et deuxième plaques de serrage (42, 44) ; et des écrous (50) engagés par filetage à des extrémités distales opposées des boulons d'ancrage (48).

10. Presse à vis (14) selon la revendication 9, **caractérisée en ce que** la partie de répartition de charge (42a, 44a) est prévue sous la forme d'une bague faisant saillie à partir d'une face interne de chacune desdites première et deuxième plaques de serrage (42, 44).

11. Presse à vis (14) selon l'une quelconque des revendications 8 à 10, **caractérisée en ce qu'**au moins une plaque de support intermédiaire (52) est interposée entre deux des plaques de filtration (36), ladite plaque de support intermédiaire (52) étant plus épaisse que chacune desdites plaques de filtration (36).

12. Presse à vis (14) selon la revendication 2, **caractérisée en ce que** la section de support de vis (66) comporte des demi-coques supérieure et inférieure (66a, 66b) adaptées pour être boulonnées l'une à l'autre avec ledit accouplement (62) entre elles.

13. Presse à vis selon la revendication 4, **caractérisée en ce que** les première et deuxième sections de filet de vis (34a, 34b) sont respectivement soudées aux premier et deuxième éléments d'accouplement (62a, 62b) puis les premier et deuxième éléments d'accouplement (62a, 62b) avec les première et deuxième sections de filet de vis (34a, 34b) montées dessus sont soumis à un procédé de traitement thermique.

14. Presse à vis selon la revendication 13, dans laquelle après le procédé de traitement thermique, les premier et deuxième éléments d'accouplement (62a, 62b) sont respectivement montés sur les première et deuxième sections de vis (20a, 20b) par soudage des première et deuxième sections de filet de vis (34a, 34b) à des arbres respectifs (32a, 32b) desdites première et deuxième sections de vis (20a, 20b).
